# EUROPEAN PATENT SPECIFICATION

(11) **EP 3 531 831 B1**
(45) Date of publication and mention of the grant of the patent: **20.04.2022**
(21) Application number: 17777779.4
(22) Date of filing: 21.09.2017
(51) Int. Cl.: A01M 21/04, A01N 59/06, A01N 59/08, A01P 13/00

(54) **METHOD AND APPARATUS FOR WEED CONTROL WITH MICROWAVES**
VERFAHREN UND GERÄT FÜR UNKRAUTBEKÄMPFUNG MIT MIKROWELLEN
PROCÉDÉ ET APPAREIL POUR LA LUTTE CONTRE LES MAUVAISES HERBES

(30) Priority: 28.10.2016 DK PA201600663
(43) Date of publication of application: 04.09.2019
(73) Proprietor: Weed Fighter ApS, 8751 Gedved (DK)
(72) Inventor: SCHMIDT, Jan Hugo, 8751 Gedved (DK)
(74) Representative: Larsen & Birkeholm A/S
(86) International application number: PCT/DK2017/050303
(87) International publication number: WO 2018/077360

(56) References cited:
- DE-U1- 20 207 237
- JP-A- 2008 072 964
- US-A- 5 141 059
- US-A1- 2005 223 638
- US-A1- 2006 283 364
- US-A1- 2013 287 909
- GRAHAM BRODIE ET AL: "Microwave Technologies as Part of an Integrated Weed Management Strategy: A Review", INTERNATIONAL JOURNAL OF AGRONOMY, vol. 2012, 1 January 2012 (2012-01-01), pages 1-14, XP055419600, ISSN: 1687-8159, DOI: 10.1155/2012/636905

## Description

### Technical field of the invention

The present invention relates to the field of weed control with microwaves.

### Background of the invention

It is known that weeds growing in agricultural areas and road sides can be fought a) chemically, by means of pesticides; b) thermally, by means of fire, steam, and hot water with foam; and c) mechanically, for example by means of ploughing, milling, harrowing and row cleaning.

It is also known that microwaves are a non-toxic method of low energy consumption, which can kill weeds, weed seeds, fungus spores, and pests. It is also known that saline treatment immediately after thermal treatment increases the effect of the thermal treatment.

GRAHAM BRODIE ET AL: " INTERNATIONAL JOURNAL OF AGRONOMY; 2012/01, p.1-14 reviews the use of microwaves for controlling weeds.

US 2013/287909 A1 discloses a method for preserving a plant material comprising steps of: (a) applying an aqueous solution comprising a "microwave attractant" such as salt to the plant material; and then (b) exposing the plant material to microwave energy.

JP 2008 072956 A discloses a mobile unit for soil sterilisation with microwaves generator containing means for spraying water on the soil surface in front of the unit.

US 5 141 059 A discloses a mobile apparatus for controlling agricultural pests in soil comprising two microwave emitting units (34), having a microwave unit ceiling (32) slopping upwards and rearwards, water reservoir (40) and means of spraying water (44) at the rear of each unit.

US 2006/283364 A1 discloses an mobile apparatus for controlling agricultural pests in soil comprising a microwave emitting units (21). The efficiency of heating by microwave radiation can be improved by mixing fertilizer salts may be mixed in the soil to be sterilized, before microwave radiation.

US 2005/223638 A1 discloses a wet heat application apparatus for e.g. killing weeds comprising a water absorbent mat with high water capillary capacity, charged and maintained with hot water and optionally further heated with microwaves wherein the mat in direct physical contact with soil and vegetation.

DE 202 07 237 U1 discloses a microwave ground heating device for burning up weeds and other unwanted vegetation mounted on four-wheel trolley.

However, there are currently no known machines or methods for weed control using microwaves in use on a commercial basis. Given that it is a very slow process to treat an area with microwaves, it is unsuitable for the treatment of larger areas. Moreover, the known methods have difficulty complying with the safety requirement of 1.0 mW per cm² microwave energy outside the machine while being mobile and efficient.

### Object of the Invention

The objective of the present invention is to provide a treatment, which does not have the aforementioned challenges.

The inventor has surprisingly found that a pre-treatment with an aqueous solution of salts can reduce the processing time with microwaves.

### Summary of the Invention

The inventor has noted that some weed has a rough (nanoscale) surface layer. Without being limited by his theory, the inventor speculates that weed, and perhaps also bacteria, with such a surface layer has a "lotus effect", which means the surface layer works as a water and dirt repellent, without necessarily having the same effect as the lotus plant. The inventor speculates that this surface layer is a form of an insulating layer, which provides resistance against the transfer of thermal energy (e.g. a gas flame or hot steam) to the plants. Therefore, it is speculated that the contact time between hot steam and plants/bacteria may be reduced if the surface layer can be disturbed.

A first aspect of the present invention relates to a method of weed control by means of microwaves, wherein the area to be treated, prior to treatment with microwaves, is treated with an aqueous solution of an organic and/or inorganic salt.

A second aspect of the present invention relates to a mobile unit for weed control by means of microwaves, wherein the mobile unit comprises:
- a tank (11) with an aqueous solution of an organic and/or inorganic salt;
- means adapted for applying an aqueous solution of an organic and/or inorganic salt to a surface; and
- a microwave oven adapted for treating a surface with microwaves.

### Brief description of the figures

Figure 1 shows a mobile unit for weed control by means of microwaves in accordance with various embodiments of the invention;
Figure 2 shows the mobile unit's motor, generator, and propulsion drive system;
Figure 3 shows the mobile unit's microwave system;
Figure 4 shows the microwave oven's ceiling and walls;
Figure 5 shows chokes in the bottom part of a horn antenna or microwave oven shield; and
Figure 6 shows the means adapted for distributing an aqueous solution of an organic and/or inorganic salt to a surface.

### Detailed Description of the Invention

A first aspect of the present invention relates to a method of weed control by means of microwaves, wherein the area to be treated, prior to treatment with microwaves, is treated with an aqueous solution of an organic and/or inorganic salt.

A second aspect of the present invention relates to a mobile unit for weed control by means of microwaves, wherein the mobile unit comprises:
- a tank (11) with an aqueous solution of an organic and/or inorganic salt;
- means adapted for applying an aqueous solution of an organic and/or inorganic salt to a surface; and
- a microwave oven adapted for treating a surface with microwaves.

The choice of salt is found to be of minor importance. When the salt is solubilized, it dissolves into charged ions. It is speculated that the charged ions initially provide an osmotic effect on the weed. During the microwave treatment, the charged ions are thought to move in and out of the surface layer of the weed. Preferred salts may be salts of uric acid that have been shown to have herbicidal properties. Other preferred salts may be sodium chloride, magnesium sulfate, or fertilizer salts (e.g. nitrate salts, phosphate salts, sulfate salts, or potassium salts).

In one or more embodiments, the area to be treated, prior to treatment with an aqueous solution of an organic and/or inorganic salt, is heated with heating means.

In one or more embodiments, the aqueous solution of an organic and/or inorganic salt is applied as an aerosol.

In one or more embodiments, the aerosol has a temperature of within the range of 50-500 degrees Celsius, such as within the range of 60-450 degrees Celsius, e.g. within the range of 70-400 degrees Celsius, such as within the range of 80-350 degrees Celsius, e.g. within the range of 90-300 degrees Celsius, such as within the range of 100-250 degrees Celsius, e.g. within the range of 150-200 degrees Celsius. The exhaust gas may in some situations bring the temperature of the aerosol to more than 500 degrees Celsius, such as 500-1000 degrees Celsius.

In one or more embodiments, the mobile unit further comprises a combustion engine for operating the mobile unit, and wherein at least a portion of the exhaust gas from the combustion engine is used to heat the aqueous solution of an organic and/or inorganic salt.

By using the combustion engine's waste heat in the weed control process, three times as much energy is available as if the energy is solely supplied from the microwaves.

In one or more embodiments, at least part of the exhaust gas from the combustion engine is led into the microwave oven compartment and/or onto the ground in front of the microwave oven compartment by means of an exhaust pipe. Using the microwaves, the ions becomes magnetized, and polarity changes several billion times per second. The magnetized ions that changes polarity several billion times per second interferes with or reduces the insulating effect in the surface layer of the weed/plants, whereby the energy transfer from steam and microwaves to the plants becomes very effective. In addition to the ions interfering with the surface layer, some of the salt ions penetrate the plant cells, whereby their water intake will be adversely affected. Thereby, the ions from the aqueous solution of an organic and/or inorganic salt results in a lower energy consumption, and a rapid and efficient transfer of energy and salt ions, allowing the mobile unit to move faster than without this treatment.

In one or more embodiments, the area being treated, after treatment with microwaves, is treated with an aqueous solution of an organic and/or inorganic salt.

In one or more embodiments, the means adapted for applying an aqueous solution of an organic and/or inorganic salt to a surface is configured for applying the aqueous solution of an organic and/or inorganic salt in front of and/or behind the mobile unit.

In one or more embodiments, the means adapted for applying an aqueous solution of an organic and/or inorganic salt to a surface is configured for applying the aqueous solution of an organic and/or inorganic salt within the front end of and/or within the rear end of the microwave oven compartment.

The aqueous solution of an organic and/or inorganic salt that is sprayed/applied within the rear end of the microwave oven compartment condenses the aerosol and/or the steam generated in the front end of the microwave oven compartment, such that the aerosol and/or the steam is forced, in a controlled manner, towards the terrain that the mobile unit is passing over.

By applying the aqueous solution of an organic and/or inorganic salt within the front end and rear end of the microwave oven compartment it also serves as a shield against microwaves, such that the microwaves do not escape the microwave oven compartment.

In one or more embodiments, the front part of the microwave oven's ceiling slopes upwards and rearwards towards the rear end of the mobile unit, while the rear part of the microwave oven's ceiling slopes upwards and forwards toward the front end of the mobile unit.

In one or more embodiments, the microwave oven's horn antenna is located at the front of the microwave oven compartment and adapted to point rearwardly towards the rear end of the mobile unit.

The major part of the microwave energy is deposited immediately under the horn antenna(s). However, there will be a small part that is released into the microwave oven compartment. When the front of the microwave oven's ceiling slopes upwards and backwards towards the back end of the mobile device, the microwaves in the front end of the microwave oven compartment will be more likely to be reflected backwards. Furthermore, when the rear part of the ceiling simultaneously slopes upwards and forwards toward the front end of the mobile unit, the microwaves in the rear end of the microwave oven compartment will tend to be reflected forward. This makes the microwaves tend to concentrate at and behind the place (the bent) in the ceiling where the front part and rear part meet. As the ceiling of the microwave oven compartment constantly moves forward as the mobile unit moves forward, the concentrated microwave energy is moved along the area being treated. This makes most of the available microwave energy being deposited onto the surface being treated, and very little escapes the microwave oven compartment.

In one or more embodiments, one or more of the walls of the microwave oven compartment comprises one or more water filled reservoirs adapted for scavenging microwaves. The reservoirs may be in the form of tubing or hollow plates. Preferably, the front wall and/or the rear wall of the microwave oven compartment comprises one or more water filled reservoirs adapted for scavenging microwaves.

In one or more embodiments, the bottom part of the microwave oven compartment and/or the bottom part of the horn antenna(s) comprise chokes. By measuring the weed temperature immediately after microwave treatment, the dosing of the microwaves can be kept to a minimum, thereby saving energy.

In one or more embodiments, the weed temperature is measured immediately after microwave treatment. Preferably, in response to said temperature measurement, the microwave treatment is adjusted accordingly.

In one or more embodiments, the mobile unit comprises means (e.g. comprising a heat sensitive camera) adapted for measuring the weed temperature immediately after microwave treatment.

In one or more embodiments, the mobile unit comprises means adapted for measuring the weed temperature immediately after microwave treatment, and wherein said means is configured for adjusting the microwave treatment (e.g. to adjust the power input to the microwave oven), in response to a pre-set temperature threshold.

As used in the specification and the appended claims, the singular forms "a", "an", and "the" include plural referents unless the context clearly dictates otherwise.

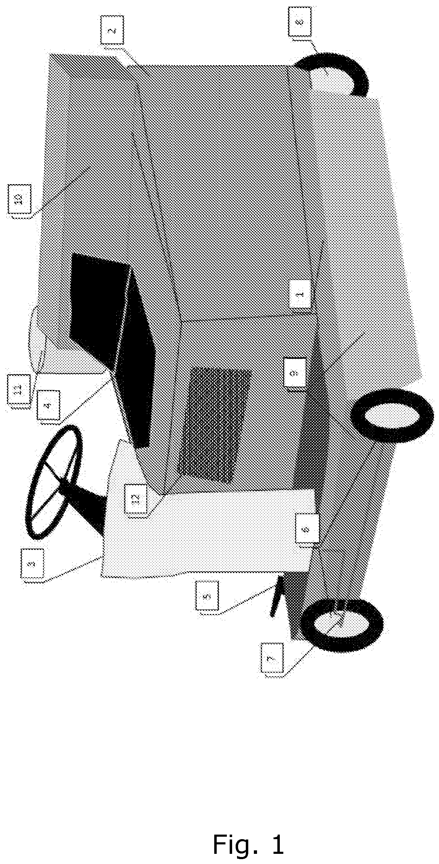

In the following, the present invention is described in relation to a preferred form of weed control. Figure 1 shows a mobile unit comprising a machine frame 1 with machine housing 2, control panel 3, seat 4, speeder 5, front wheel 6, steering rods 7, rear wheel 8, microwave screen 9, water tank 10, tank 11 with aqueous solution of an organic and/or inorganic salt, and air intake grate 12.

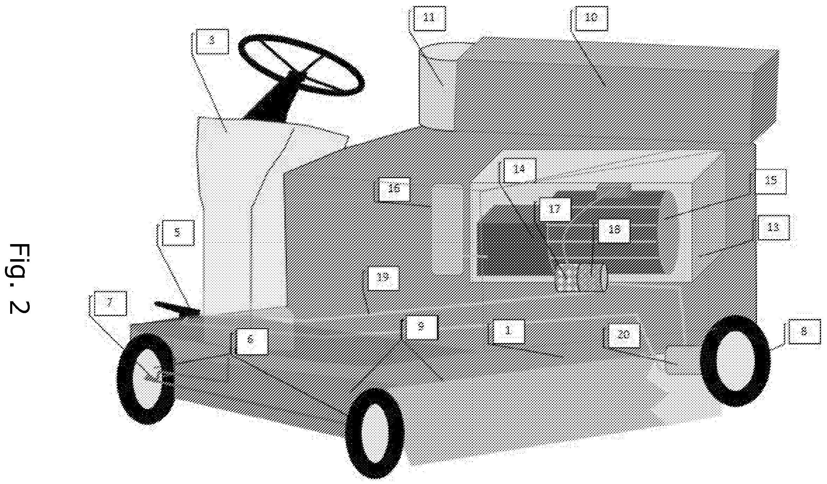

In Figure 2, the machine housing 2 is shown transparent. An insulated box 13 with internal combustion engine 14 and generator 15 is shown. Further shown components are: a fuel tank 16, and a hydraulic propulsion system comprising an electric motor 17, oil pump 18, and oil pipes 19 connecting the oil pump 18 with the speeder 5 and the motor 20.

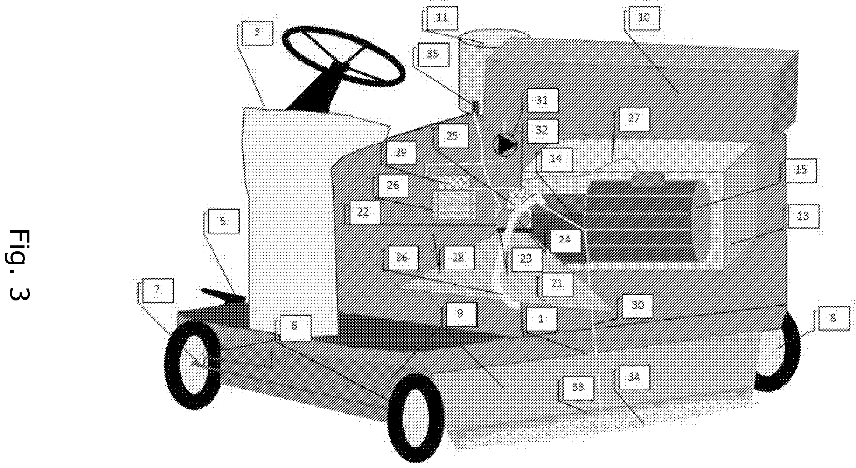

In Figure 3, the horn antenna 21 is shown with waveguide 22, plastic or glass fiber membrane 23, isolator 24, and magnetron 25, which receives electricity from generator 15 via transformer 26 and cables 27 and 28. Heat exchanger 29 transfers surplus heat from transformer 26 to the water in the water conduit 30 by pump 31. Heat exchanger 32 transfers surplus heat from magnetron 25 to water in water conduit 30 by pump 31. Water from conduit 30 is atomized in spray bar 33 such that the aerosol 39 is sprayed over lower edge of side shield 9.

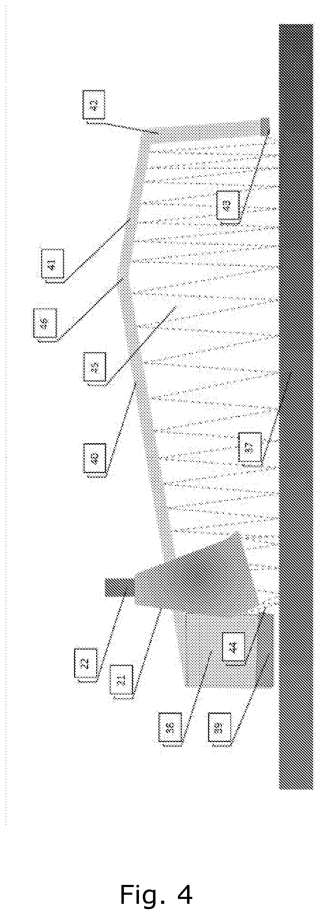

In the waveguide 22, an isolator 24 is seen, which absorbs reflected microwave energy and deposits this energy into heater 35 in tank 11 with aqueous solution of an organic and/or inorganic salt. The exhaust pipe 36 from the internal combustion engine 14 opens at the front lower edge of the horn antenna 21. Figure 4 shows terrain 37, microwave oven front wall 38, with water filled plastic hoses or plastic plates 39.

The front part 40 of the microwave oven is tilted forward while the rear part 41 of the oven is tilted backwards.

The rear wall 42 of the microwave is shown, with water-filled plastic hoses or plastic plates 43.

Additionally, waveguide 22 and horn antenna 21 are seen, which point rearwardly.

It can be seen, that the microwaves 44 at the front of the microwave are quickly absorbed into water-filled plastic hoses or plastic plates 39.

It can also be seen, that the microwaves are forced backwards by the front part 40 of the ceiling of the microwave oven compartment until they reach the rear part 41, which inhibits the backwards migration in the microwave oven compartment 45. This makes the microwaves tend to concentrate at and behind the place (the bent) 46 in the ceiling where the front part 40 and rear part 41 meet. As the ceiling of the microwave oven compartment constantly moves forward as the mobile unit moves forward, the concentrated microwave energy is moved along the area being treated. This makes most of the available microwave energy being deposited onto the surface being treated, and very little escapes the microwave oven compartment 45.

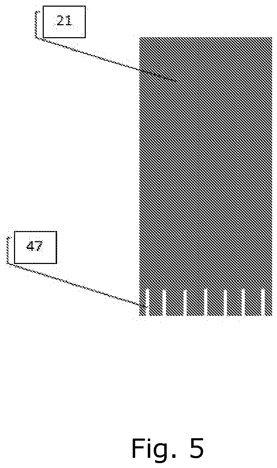

Figure 5 shows chokes 47 in the bottom part of a horn antenna or microwave oven shield.

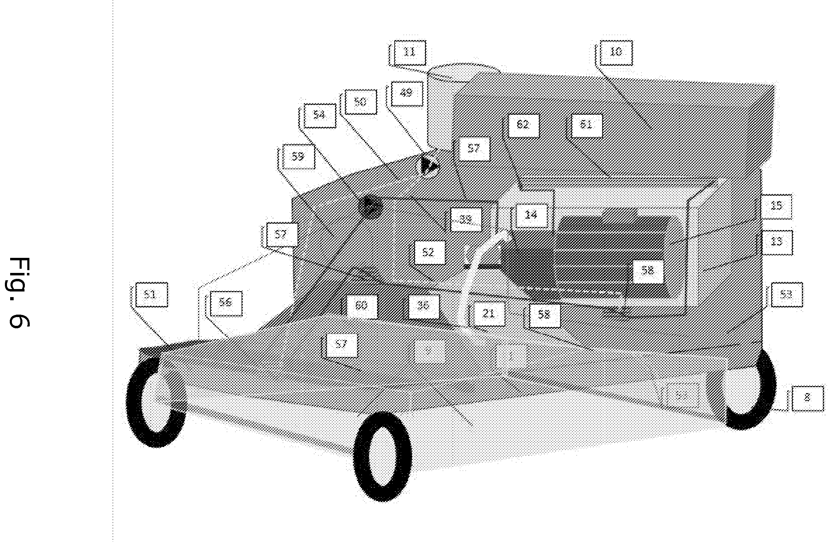

In Figure 6, pump 49 is shown, which pumps an aqueous solution of an organic and/or inorganic salt through pipe 50 to spray bar 51 at the front of the mobile unit and through pipe 52 to spray boom 53 at the rear of the mobile unit. Circulation pump 54 circulates cooling water from combustion engine 14 through pipe 55 from which heat is deposited in heat exchangers 56, 57 and 58. Thereafter, the water is directed to heat exchanger 61 in insulated box 13 before it is returned to combustion engine 14 via pipe 62.

Heat exchanger 56 heats the aqueous solution of an organic and/or inorganic salt to spray bar 51. Heat exchanger 57 heats the air which is blown through blower 59 through blowout hopper 60. Heat exchanger 58 heats the aqueous solution of an organic and/or inorganic salt to spray bar 53.

## Claims

1. A method for weed control by means of microwaves, **characterized in that** the area to be treated, prior to treatment with microwaves, is treated with an aqueous solution of an organic and/or inorganic salt.

2. A method according to claim 1, **characterized in that** the area to be treated, prior to treatment with an aqueous solution of an organic and/or inorganic salt, is heated with heating means.

3. A method according to any one of the claims 1-2, **characterized in that** the aqueous solution of an organic and/or inorganic salt is applied as an aerosol.

4. A method according to claim 3, **characterized in that** the aerosol has a temperature of within the range of 50-500 degrees Celsius.

5. A method according to any one of the claims 1-4, **characterized in that** the area being treated, after treatment with microwaves, is treated with an aqueous solution of an organic and/or inorganic salt.

6. A method according to any one of the claims 1-5, **characterized in that** the aqueous solution is of an inorganic salt selected from the group consisting of sodium chloride, magnesium sulfate, and mixtures thereof.

7. A mobile unit for use in the method of claims 1-6, **characterized in that** the mobile unit comprises:
- a tank (11) with an aqueous solution of an organic and/or inorganic salt;
- means adapted for applying said aqueous solution of an organic and/or inorganic salt to a surface; and
- a microwave oven adapted for treating a surface with microwaves.

8. A mobile unit according to claim 7, **characterized in that** the mobile unit further comprises a combustion engine (14) for operating the mobile unit, and wherein at least a portion of the exhaust gas or heat from the combustion engine (14) is used to heat the aqueous solution of an organic and/or inorganic salt.

9. A mobile unit according to claim 8, **characterized in that** at least part of the exhaust gas from the combustion engine (14) is led into the microwave oven compartment (45) and/or onto the ground in front of the microwave oven compartment (45) by means of an exhaust pipe (36).

10. A mobile unit according to any one of the claims 7-9, **characterized in that** the front part of the microwave oven's ceiling (40) slopes upwards and rearwards towards the rear end of the mobile unit, while the rear part of the microwave oven's ceiling (41) slopes upwards and forwards toward the front end of the mobile unit.

11. A mobile unit according to any one of the claims 7-10, **characterized in that** the microwave oven's horn antenna (21) is located at the front of the microwave oven compartment (45) and adapted to point rearwardly towards the rear end of the mobile unit.

12. A mobile unit according to any one of the claims 7-11, **characterized in that** one or more of the walls of the microwave oven compartment (45) comprises one or more water filled reservoirs adapted for scavenging microwaves.

13. A mobile unit according to any one of the claims 7-12, **characterized in that** the mobile unit further comprises means adapted for measuring the weed temperature immediately after microwave treatment, and wherein said means is configured for adjusting the microwave treatment in response to a pre-set temperature threshold.

## Patentansprüche

1. Verfahren zur Unkrautbekämpfung mithilfe von Mikrowellen, **dadurch gekennzeichnet, dass** das zu behandelnde Gebiet vor der Behandlung mit Mikrowellen mit einer wässrigen Lösung eines organischen und/oder anorganisches Salzes behandelt wird.

2. Verfahren nach Anspruch 1, **dadurch gekennzeichnet, dass** das zu behandelnde Gebiet vor der Behandlung mit einer wässrigen Lösung eines organischen und/oder anorganischen Salzes mit Wärmemitteln behandelt wird.

3. Verfahren nach einem der Ansprüche 1-2, **dadurch gekennzeichnet, dass** die wässrige Lösung eines organischen und/oder anorganischen Salzes als Aerosol aufgetragen wird.

4. Verfahren nach Anspruch 3, **dadurch gekennzeichnet, dass** das Aerosol eine Temperatur innerhalb des Bereichs von 50-500 Grad Celsius aufweist.

5. Verfahren nach einem der Ansprüche 1-4, **dadurch gekennzeichnet, dass** das zu behandelnde Gebiet nach der Behandlung mit Mikrowellen mit einer wässrigen Lösung eines organischen und/oder anorganischen Salzes behandelt wird.

6. Verfahren nach einem der Ansprüche 1-5, **dadurch gekennzeichnet, dass** die wässrige Lösung aus einem anorganischen Salz ist, das ausgewählt ist aus der Gruppe bestehend aus Natriumchlorid, Magnesiumsulfat und Mischungen davon.

7. Mobile Einheit zur Verwendung in dem Verfahren nach Anspruch 1-6, **dadurch gekennzeichnet, dass** die mobile Einheit Folgendes umfasst:
- einen Tank (11) mit einer wässrigen Lösung eines organischen und/oder anorganischen Salzes;
- Mittel, die dazu ausgelegt sind, die wässrige Lösung eines organischen und/oder anorganischen Salzes auf eine Fläche aufzutragen; und
- einen Mikrowellenofen, der dazu ausgelegt ist, eine Fläche mit Mikrowellen zu behandeln.

8. Mobile Einheit nach Anspruch 7, **dadurch gekennzeichnet, dass** die mobile Einheit ferner einen Verbrennungsmotor (14) zum Betreiben der mobilen Einheit umfasst, und wobei mindestens ein Teil des Abgases oder der Wärme von dem Verbrennungsmotor (14) dazu verwendet wird, die wässrige Lösung eines organischen und/oder anorganischen Salzes zu erwärmen.

9. Mobile Einheit nach Anspruch 8, **dadurch gekennzeichnet, dass** mindestens ein Teil des Abgases mithilfe eines Abgasrohrs (36) aus dem Verbrennungsmotor (14) in die Kammer (45) eines Mikrowellenofens und/oder auf den Boden vor der Kammer (45) des Mikrowellenofens geleitet wird.

10. Mobile Einheit nach einem der Ansprüche 7-9, **dadurch gekennzeichnet, dass** der vordere Teil der Decke (40) des Mikrowellenofens nach oben und nach hinten in Richtung des hinteren Endes der mobilen Einheit angeschrägt ist, während der hintere Teil der Decke (41) des Mikrowellenofens nach oben und nach vorne in Richtung des vorderen Endes der mobilen Einheit angeschrägt ist.

11. Mobile Einheit nach einem der Ansprüche 7-10, **dadurch gekennzeichnet, dass** sich die Hornantenne (21) des Mikrowellenofens an der Vorderseite der Kammer (45) des Mikrowellenofens befindet und dazu ausgelegt ist, nach hinten in Richtung des hinteren Endes der mobilen Einheit zu zeigen.

12. Mobile Einheit nach einem der Ansprüche 7-11, **dadurch gekennzeichnet, dass** eine oder mehrere der Wände der Kammer (45) des Mikrowellenofens einen oder mehrere mit Wasser gefüllte Behälter umfasst, der/die dazu ausgelegt sind, Mikrowellen zu reinigen.

13. Mobile Einheit nach einem der Ansprüche 7-12, **dadurch gekennzeichnet, dass** die mobile Einheit ferner Mittel umfasst, die zum Messen der Unkrauttemperatur direkt nach der Mikrowellenbehandlung ausgelegt sind, und wobei das Mittel dazu konfiguriert ist, die Mikrowellenbehandlung als Reaktion auf einen voreingestellten Temperaturschwellenwert anzupassen.

## Revendications

1. Procédé de lutte contre les mauvaises herbes au moyen de micro-ondes, **caractérisé en ce que** la zone à traiter, avant le traitement aux micro-ondes, est traitée avec une solution aqueuse d'un sel organique et/ou inorganique.

2. Procédé selon la revendication 1, **caractérisé en ce que** la zone à traiter, avant traitement par une solution aqueuse d'un sel organique et/ou inorganique, est chauffée par des moyens de chauffage.

3. Procédé selon l'une quelconque des revendications 1 à 2, **caractérisé en ce que** la solution aqueuse d'un sel organique et/ou inorganique est appliquée sous forme d'aérosol.

4. Procédé selon la revendication 3, **caractérisé en ce que** l'aérosol a une température comprise dans la plage de 50 à 500 degrés Celsius.

5. Procédé selon l'une quelconque des revendications 1 à 4, **caractérisé en ce que** la zone traitée, après traitement aux micro-ondes, est traitée avec une solution aqueuse d'un sel organique et/ou inorganique.

6. Procédé selon l'une quelconque des revendications 1 à 5, **caractérisé en ce que** la solution aqueuse est d'un sel inorganique choisi dans le groupe constitué par le chlorure de sodium, le sulfate de magnésium et des mélanges de ceux-ci.

7. Unité mobile destinée à être utilisée dans le procédé selon les revendications 1 à 6, **caractérisée en ce que** l'unité mobile comprend :
- un réservoir (11) avec une solution aqueuse d'un sel organique et/ou inorganique ;
- des moyens adaptés pour l'application de ladite solution aqueuse d'un sel organique et/ou inorganique sur une surface ; et
- un four à micro-ondes adapté pour le traitement d'une surface aux micro-ondes.

8. Unité mobile selon la revendication 7, **caractérisée en ce que** l'unité mobile comprend en outre un moteur à combustion (14) destiné à faire fonctionner l'unité mobile, et dans laquelle au moins une partie des gaz d'échappement ou de la chaleur provenant du moteur à combustion (14) est utilisée pour chauffer la solution aqueuse d'un sel organique et/ou inorganique.

9. Unité mobile selon la revendication 8, **caractérisée en ce qu'**au moins une partie des gaz d'échappement provenant du moteur à combustion (14) est conduite dans le compartiment du four à micro-ondes (45) et/ou sur le sol devant le compartiment du four à micro-ondes (45) au moyen d'un tuyau d'échappement (36).

10. Unité mobile selon l'une quelconque des revendications 7 à 9, **caractérisée en ce que** la partie avant du plafond du four à micro-ondes (40) est inclinée vers le haut et vers l'arrière vers l'extrémité arrière de l'unité mobile, tandis que la partie arrière du plafond du four à micro-ondes (41) est inclinée vers le haut et vers l'avant vers l'extrémité avant de l'unité mobile.

11. Unité mobile selon l'une quelconque des revendications 7 à 10, **caractérisée en ce que** l'antenne cornet du four à micro-ondes (21) est située à l'avant du compartiment du four à micro-ondes (45) et adaptée pour pointer vers l'arrière vers l'extrémité arrière de l'unité mobile.

12. Unité mobile selon l'une quelconque des revendications 7 à 11, **caractérisée en ce qu'**une ou plusieurs des parois du compartiment du four à micro-ondes (45) comprend un ou plusieurs réservoirs remplis d'eau adaptés pour le piégeage des micro-ondes.

13. Unité mobile selon l'une quelconque des revendications 7 à 12, **caractérisée en ce que** l'unité mobile comprend en outre des moyens adaptés pour la mesure de la température des mauvaises herbes immédiatement après le traitement aux micro-ondes, et dans laquelle lesdits moyens sont configurés pour l'ajustement du traitement aux micro-ondes en réponse à un seuil de température prédéfini.
